# EUROPEAN PATENT APPLICATION

(11) **EP 0 924 574 A2**
(43) Date of publication of application: **23.06.1999**
(21) Application number: 98119741.1
(22) Date of filing: 21.10.1998
(51) Int. Cl.: G03G 15/01

(54) **Apparatus for displaying and printing composite images**

(30) Priority: 17.12.1997 US 992436
(71) Applicant: Zap Create Inc., Shibuya-ku, Tokyo 150-0001 (JP)
(72) Inventor: Kaneko, Osamu, Miyamae-ku, Kawasaki-shi, Kanagawa 216 (JP)
(74) Representative: Klingseisen, Franz, Dipl.-Ing.

(57) **Abstract**

Disclosed is an improved seal-forming print apparatus comprising a memory section (6) to store background images in the form of digital signals; a camera section (1) to take a picture of an object; a composing section (2) to produce an object-and-background composite image from a selected background image and an image of the object; a printer (5) to print out the object-and-background composite image; a "right side left" reversal circuit (3) to reverse the object-and-background composite image and output the "right side left" reversal of the object-and-background composite image; and a display (4) to show the "right side left" reversal of the object-and-background composite image.

The display (4) can show a mirror-like image of the object, thereby facilitating the decision on which pose is best to be photographed.

## Description

### [Technical Field of the Invention]

The present invention relates to a seal print apparatus and more particularly to a desk-top type of seal print apparatus or seal-forming print apparatus, which is reduced in size and weight, and is capable of photographing a real person and combining the portrait with a selected frame to print out the composite image.

### [Related Background Art]

Photographing stands are put in towns, and people can take pictures of them for identification in various of licenses, such as driver's licenses, identification cards etc. These photographs may be monochrome or polychrome, and may be available in the form of printing paper of plural kinds of sizes.

Recently photographing-and-printing apparatuses which are called "Print Club" or "Pri-Clu", have been popular among young people. Such a apparatus can produce a set of 16 pre-cut sticky parts of one and same image each separable from a base sheet for swapping such photo-seals or for fixing the photo-seal in a photograph album.

Such photographing-and-printing apparatuses are of standing type, and are installed and disposed in an amusement arcade. Sometimes, such a apparatus is found to be placed aside of an automatic vending machine. A person can pose for his portrait with a picture of background behind, and a picture of him is taken by a camera. Then, the still photograph thus taken by the camera is printed on a pre-cut sticker of paper to provide a set of for example, 16 pre-cut stickers of one and same image each separable from the lining sheet. An improved version of photographing-and-printing stand has a plurality of background images stored therein, thereby permitting a person to select one among such lots of kinds of backgrounds. The image of his portrait and the image of desired background are composed together, and then a picture of the composite image is printed out. The composite image is displayed beforehand as a chromatogram image, permitting the person to selectively change the background or his pose prior to printing. After that, the person agrees on printing, and then the apparatus provides a picture of the composite image by printing and outputting.

When a composite image is displayed prior to printing, it is most preferable that the person can have the composite image appearing like reflection on a mirror because otherwise, he may feel odd or awkward in changing his posture to find what pose is best to be photographed. To obtain a mirror-like image it is necessary to make a "right side left" reversal in the composite image. To attain this, an "L"-angled lens functioning like a mirror is put in front of the camera, thereby causing the "right to left" reversal of the portrait to be projected to the camera, and to the display via the camera.

This "L"-angled lens functioning, however, requires a significant length of distance between the mirror and the camera. Therefore, it can be used in a photographing-and-printing stand, which is large enough to allow the camera to be a relatively long distance apart from the mirror. The size of the photographing -and-printing apparatus, therefore, cannot be reduced with recourse to use of such mirrors. Also, disadvantageously the display is fixed in position, and therefore, some people feel inconvenience in looking at them in the mirror because their shapes often cannot be fitted in the display unless they control their posture.

Accordingly, an object of the present invention is to provide a seal-forming print apparatus which is small in size and light in weight, permitting a person to have a look at a mirror-like image in the display to facilitate the making of decision on what pose is best to be photographed.

Another object of the present invention is to provide a seal-forming print apparatus which uses along with a camera and a console, a "right side left" reversal circuit to electronically deal with a desired object image and a selected background image so that an instantaneous pose once selected may be composed with the selected background to show the composite image on real time prior to printing out.

### [Disclosure of the Invention]

A seal-forming print apparatus according to the present invention comprises: a memory section to store background images in the form of digital signals; a camera section to take a picture of an object; a composing section to produce a composite image from a selected background image and an image of the object; a printer to print out said composite image; a "right side left" reversal circuit to reverse said composite image and output the "right side left" reversal of said composite image; and a display to show the "right side left" reversal of said composite image.

The composing section may comprise means to reduce the analogue signals representative of the picture of the object from said camera section and the digital signals representative of background images from said memory section to R, G and B signals, and means to selectively output said R, G and B signals pertaining to said analogue signals of the object at predetermined coded-portions of said R, G and B signals pertaining to said digital signals of background images, thereby producing and outputting object-and-background composite images.

Also, a seal-forming print apparatus according to the present invention comprises: a memory section to store background images in the form of digital signals; a camera section to take a picture of an object and output the analogue signals representative of the image of the object; a graphic processing section to insert the image of the object in a selected background image or in a predetermined area of a selected background image, thereby producing and outputting an object-and-background composite image; a printer to print out said object-and-background composite image; a "left side right" reversal circuit to reverse said composite image and output a "right side left" reversal of said composite image; and a display to show the "left side right" reversal of said object-and-background composite image.

The present invention will be more clearly understood from the detailed description with reference to the accompanying drawingd.

### [Brief Description of the Drawings]

Fig. 1 is an overall block diagram of a seal-forming print apparatus according to a first embodiment of the present invention;
Fig. 2 shows different functions of the CPU section of the seal-forming print apparatus;
Fig. 3 is a block diagram of one example of the "right side left" reversal circuit of the seal-forming print apparatus;
Fig. 4 is a block diagram of another example of the "right side left" reversal circuit of the seal-forming print apparatus;
Fig. 5 is a block diagram of the graphic processing section of the seal-forming print apparatus;
Fig. 6 illustrates how the graphic processing section works;
Fig. 7 is an overall block diagram of a seal-forming print apparatus according to a second embodiment of the present invention; and
Fig. 8 is an overall block diagram of a seal-forming print apparatus according to a third embodiment of the present invention.

### [Description of Special Embodiments]

A preferred embodiment of the present invention is stated detail in reference of Figures.

### First Embodiment

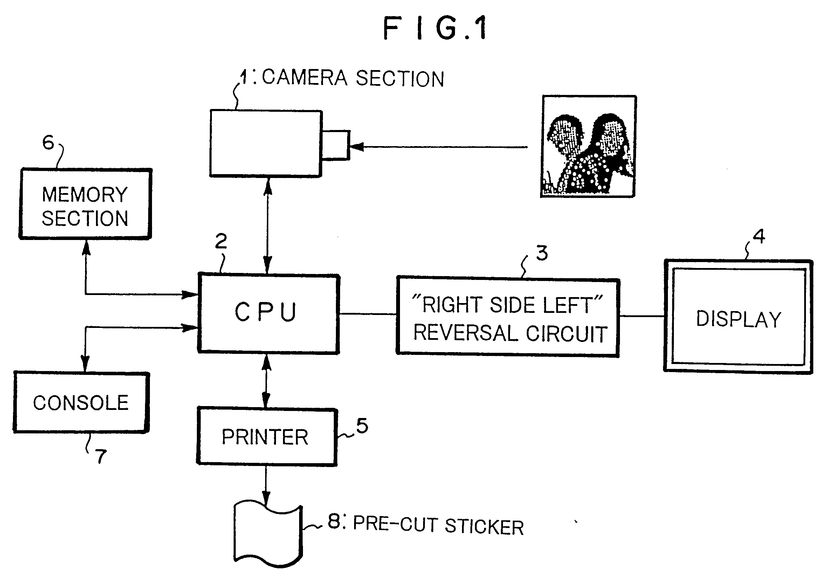

Fig. 1 is a block diagram of a first embodiment of the present invention. a seal-forming print apparatus according to the first embodiment of the present invention comprises as following.

A camera section 1 is a small-sized camera of CCD or CMOS type, which is capable of converting the radiation from an object such as a person or article to electric signals in analogue form. It has, for example, 270,000 or more pixels, and it is equipped with an automatic sensitivity control, thereby assuring that analogue video-signals can be outputted with an increased resolution, free of saturation over a relatively wide intensity range from 5 to 10,000 luxes.

A CPU section 2 performs a required control on composition of analogue object image signals from the camera section and digital background image signals from a memory 6, and other controls on a overall seal-forming print apparatus. A "right side left" reversal circuit 3 will reverse an object-and-background composite signal right side left.

A display 4 has a drive circuit associated therewith, and it is preferably a 5.5 inch-large liquid-crystal type display device consuming a decreased quantity of electric power. Also, preferably from the human engineering point of view the display device 4 is designed to be movable along with the camera section 1. The printer 5 prints out a set of six sheets each containing 4 x 4 pre-cut stickers of one and same object-and-background composite image. The printer 5 can print such composite images with the following particulars of printing quality: 256 graduations; 16,770,000 colors; 766 x 464 dots (maximum); and printing speed of approximately 59 seconds.

The memory 6 may be contained in the CPU, and may be a ROM, RAM, DRAM, SRAM etc. Preferably backgrounds which are supposed to be most probably used are selected among those stored in the CD-ROM and so like, and for example 100 frames of backgrounds thus selected are stored in a semiconductor EPROM of several megabytes or several ten megabytes. The quick availability of most probable backgrounds will expedite the composing of an object image with a selected background image. The memory 6 may be a CD-ROM, CD-RAM, CD-Rewritable, DVD-ROM, DVD-RAM, magnetic tape, digital movie or still camera, hard disk, spacial memory or any other memory means which is capable of storing a plurality of images. Optionally there may be some associated means to permit the composing of some selected images in a single frame.

A console 7 has several buttons, such as Up-and-Down Button for selecting frames of background, Printing-Out Button for outputting composite images or Cancelling Button for cancelling the frame of background once selected. The user can operate the seal-forming print apparatus easily with the aid of such control buttons. Examples of some other buttons are Coin-Returning Button or Color-Depth Controlling Button.

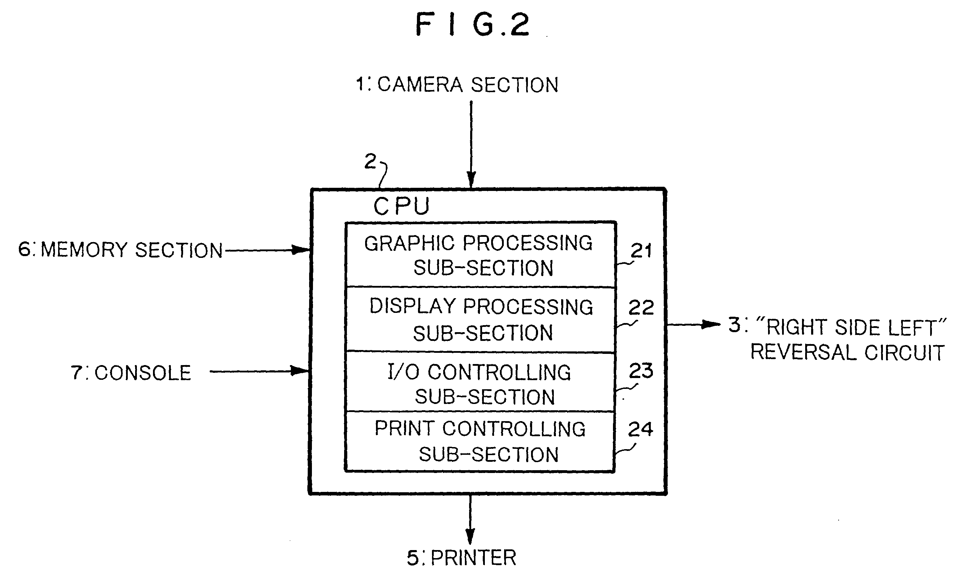

Referring to Fig. 2, the CPU section 2 is composed of Graphic Processing sub-section 21, Display Processing sub-section 22, I/O Controlling sub-section 23 and Print Controlling sub-section 24. Assume that an access is made to the memory 6, and then the screen is caused to show the initial pattern including "Recommend", "Couple", "Message", "Horoscope", "Seasons", "Scenery", "Humor", "Horror", "Animals" and other indications. Then, the Up-and-Down Button is depressed to select a desired group of background frames among those specified items, again selecting a desired frame of background in the so selected group to produce a background image signal, which is to be composed with an analogue object image signal from the camera section 1. The Display Processing sub-section 22 converts the object-and-background composite signal to the one which can be displayed in the display 4, as for instance, the composite signal may be changed to be adaptable to the NTSC system of the interlace type. The I/O Controlling sub-section 23 deals with the processing of interfaces relative to different signals from the camera section 1, the memory 6 and the console 7, and relative to signals to the printer 4 and the "right side left" reversal circuit 3. The Print Controlling sub-section 24 converts the object-and-background composite signal from the Graphic Processing sub-section 21 to the signal of the type which can be handled in the printer section 4. Specifically the object-and-background composite signals are digitalized in form, and a predetermined number of same picture frames are arranged in a single sheet form to be printed.

The CPU section 2 has operational and application programs stored therein, which programs are required for effecting the above described functions. Also, the CPU section 2 performs the overall control of the seal-forming print apparatus such as power-on, exhibition of some recommendable object-and-background composite patterns for user's reference while waiting, detection of coins put in the coin slot, presentation of initial screen patterns, printing-out of object-and-background composite images and power-off. These are conducted sequentially in a given order.

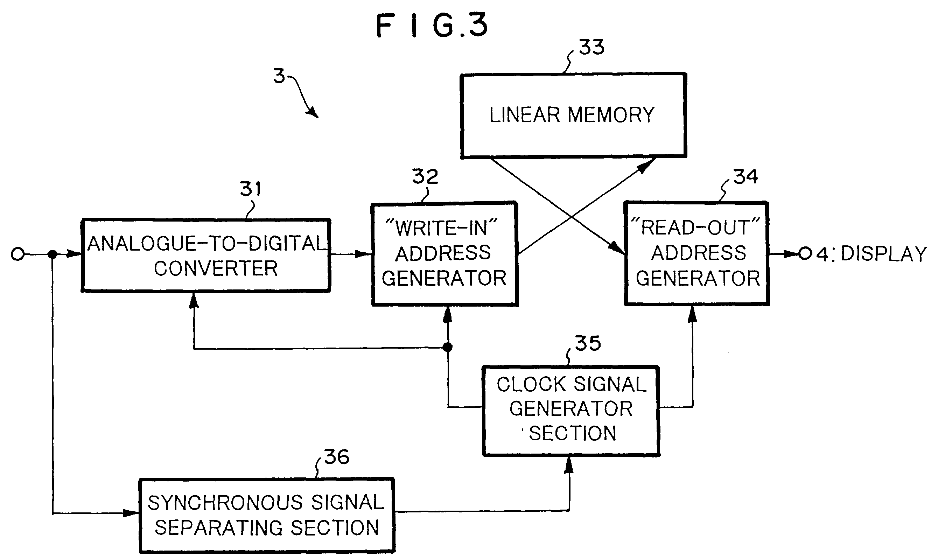

Next, referring to Fig. 3, the "right side left" reversal circuit 3 receives an object-and-background composite signal from the graphic processing sub-section 21 at its input terminal, and on one hand, the object-and-background composite signal is directed to an analogue-to-digital converter 31 to convert the analogue object image component of the object-and-background composite signal to digital signals, which are added to the digital background component of the object-and-background composite signal, thus providing a complete digital object-and-background composite signal. The complete digital composite signal is inputted into the "first-in last out" linear memory 33 according to the addresses supplied by a "write-in" address generator 32 so that early-stored or preceding data are replaced by following or new data in the linear memory 33. These data are addressed and read out from the linear memory 33 by a "read-out" address generator 34 according to the "first-in last out" principle.

On the other hand, synchronous signals, which are used in synchronizing the writing-in and reading-out of signals, are retrieved from the object-and-background composite signal by a synchronous signal separating section 36, and the so separated synchronous signal is directed to a clock signal generator section 35 to generate clock signals in synchronism with the synchronous signal. The address generators 32 and 34 are responsive to the clock signals for generating addresses.

Thus, a "right side left" reversal is effected for each and every line to provide a "right side left" reversal of the frame. Agreement of writing-in and reading-out synchronous signals both in frequency and phase contributes simplicity in structure, and is advantageous to the designing and the saving of the manufacturing cost involved. A minimum difference if noticeable in frequency and phase causes little or no problem.

The FILO linear memory 33 is an elongated shift register, whose store length is long enough to accommodate a plurality of pixels arranged in a single line in the picture signal, say 640 pixels. Data are sequentially put in the storage area of the linear memory 33. The data put in at the last is read out first according to the "first-in last out" principle.

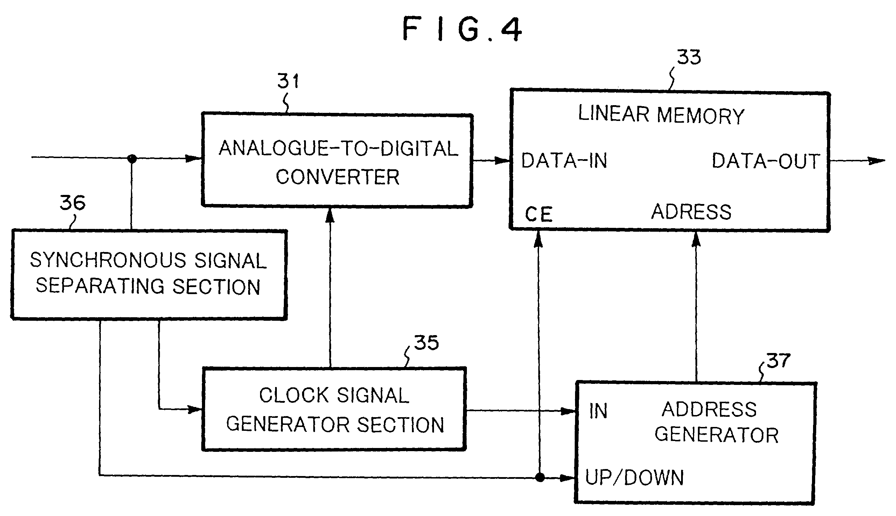

A variety of linear memory circuits can be designed for working according to the "first-in last out" principle. As shown in Fig. 3, the linear memory 33 may be equipped with separate address generators 32 and 34 for writing-in and reading-out. Alternatively, as shown in Fig.4, the linear memory 33 may be equipped with a counter as a single address generator 37. The counter 37 is responsive to the UP control signal from the synchronous signal separating section 36 for switching to the up-counting mode to generate increasing addresses in the writing-in phase whereas the counter 37 is responsive to the DOWN control signal from the synchronous signal separating section 36 for switching to the down-counting mode to generate decreasing addresses in the reading-out phase. The "right side left" reversal circuit structure shown in Fig. 3 is simple and less expensive than the "right side left" reversal circuit structure shown in Fig. 4, and is accordingly advantageous to the down-sizing and the saving of manufacturing cost.

According to the use of such "right side left" reversal circuit structure, the person can have a mirror-like look at him on the display 4 as for instance, when extending one arm in one direction he may have natural feeling by observing his arm extending in same direction in the display 4, thereby facilitating his best judgement for posing in the display.

The "right side left" reversal signal is directed from the linear memory 33 to a drive circuit for the liquid crystal display 4 where the signal is converted to the one appropriate for use in the display 4. Ordinarily the drive circuit generates drive signals in digital form, thus permitting the digital signals read out from the linear memory 33 can be advantageously used without modification.

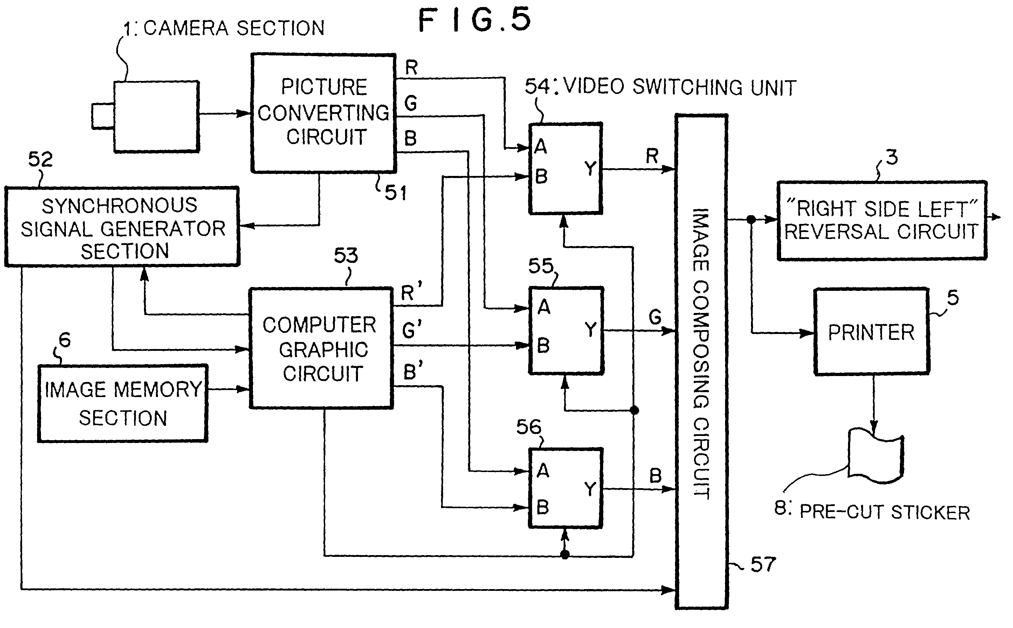

Referring to Fig. 5, a graphic processing sub-section 21 is described below. The camera section 4 may be a CCD or CMOS type video camera having outputted terminals for outputting analogue object image signals and YC signals, which signals are directed to a picture converting circuit 51 to provide analogue signals of primary-color components R, G and B, and at the same time, separate synchronous signals. A computer graphic circuit 53 has a CPU function. Also, it has a computer graphic function (provided by a graphic large-scale integration) for outputting a selected background image in the form of signals of primary-color components R', G' and B'. An Affine Processing LSI which is capable of rotating, enlarging, reducing images in size, may be used so that a selected background image may be modified as desired. For instance, the image may be increased in density or may be shaded off. Preferably the signals appearing at the outputted terminals of the computer graphic circuit 53 may be in the form of primary-color components R', G' and B' to be in consistency with those appearing at the outputted terminals of the picture converting circuit 51 for the convenience of later handling in composing. For example, 100 frames of different backgrounds are stored in the background image memory 6, and at least one frame of background is selected under the control of the CPU 2. Preferably the frame of background is temporarily stored in a cash memory or flush memory in the computer graphic circuit 53 for later graphic processing.

A synchronous signal generator section 52 compares the synchronous signal from the picture converting circuit 51 with the synchronous signal from the computer graphic circuit 53 to reduce any difference in frequency and phase.

The computer graphic circuit 53 detects pre-selected areas from the background image in terms of predetermined codes appearing in the background image signal to provide high/low control signals, which are directed to video switching units 54, 55 and 56. These video switching units 54, 55 and 56 are responsive to such control signals for adding the object image signals of primary-color components R, G and B from the picture converting circuit 51 to the background image signal of primary-color components R', G' and B' from the computer graphic circuit 53 at the so detected areas of the background image through their quick switching action. Every background image has a preselected area to allow an object image to be fitted therein. Such a preselected area is indicated in terms of predetermined code. A byte of eight bits such as 00001111 is selected among color-identification codes from 0 to 255 to be allotted to the preselected area in a selected background image when stored in the memory section 6. Thus, an object-and-background composite signal representing a resultant image in which the object image is added to the predetermined area of the selected background. The high/low control signals may be applied to the "right side left" reversal circuit 3 for converting the analogue signal from the camera section 1 to the corresponding digital signal.

An image composing circuit 57 is responsive to the signals of primary-color components R, G and B from the switching units 54, 55 and 56 for providing object-and-background composite signals or YC signals. In the image composing circuit 57, the input R, G and B signals are preferably converted to the signals of the type which can be handled in the "right side left" reversal circuit 3, the display 4 and the printer 5, which follow the image composing circuit 57. In this particular example the input R, G and B signals are converted to the composite or YC signals which can be handled in the printer 5.

The printer section 5 is responsive to the composite or YC signals for printing the object-and-background composite image, and may be an ink-jet printer, a thermal transfer printer, a self-color developing type printer or a fluorescent-lighting type printer. The printing paper used may be photographic paper or ordinary paper. To obtain developed-and-printed matter of high quality a certain paper for exclusive photographic use is preferably used.

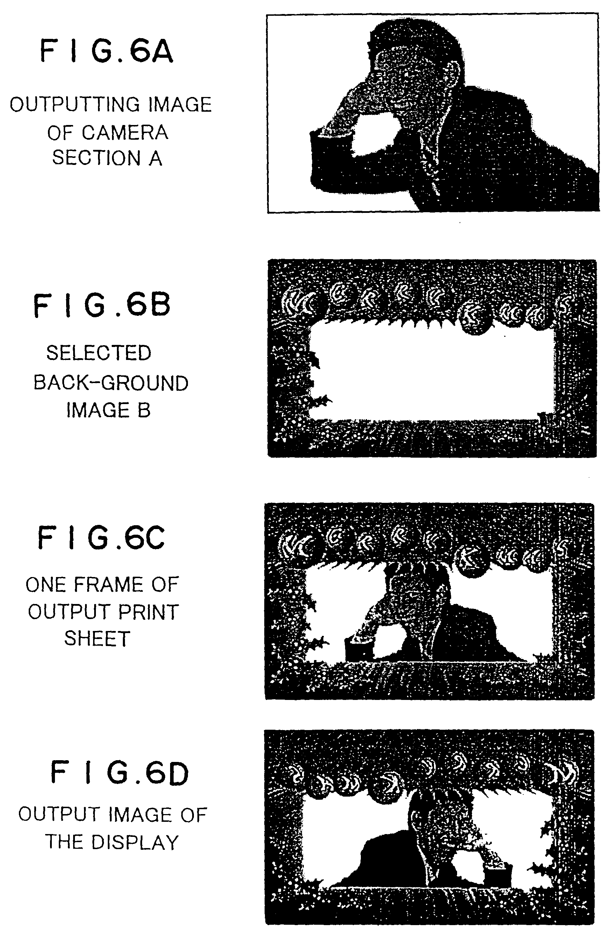

Figs. 6(a) to 6(d) show frames appearing at different parts of Fig. 5. Assuming that a person raises his right hand up, the camera section 4 takes a picture of his pose (see Fig. 6(a)), and then the picture converting circuit 51 converts the object image signal representing the so taken picture to the R, G and B signals. Also, assuming that he depresses the UP/DOWN button in the console 7 to select a background image among those grouped in "SEASONS" (see Fig. 6(b)), and then the computer graphic circuit 53 converts the background image signal representing the so selected background image to the R', G' and B' signals, which are directed to the video switching units 54, 55 and 56. On the other hand, the computer graphic circuit 53 detects a predetermined area from the background image in terms of predetermined code. Then, the object image A is permitted to be put in the predetermined area of the background image B by joining horizontal line sections of the object image sequentially with horizontal blank sections of the background image at controlled time in each horizontal sweep, thereby providing a superimposed image (see Fig. 6(c)). This superimposed image is reversed "right side left" by the "right side left" reversal circuit 3 to appear in the display 4. The object image appearing in the display (see Fig. 6(d)) is like a mirror image relative to the original (see Fig. 6(a)), the hand being raised on the same side in the display 4 as the hand actually raised in front of the camera section 1. Thus, the person can have no strange feeling in setting his pose in the display 4.

Most preferably the camera section 1 and the display 4 may be so ganged that they may be moved together to be oriented in one and same way with their optical axes aligned all the time when the camera section is changed in posture, as for instance, the camera section is tilted toward one's face. Thus, when the person has a look at the camera's lens, he can have a look at him in the display without turning his eyes.

### Second Embodiment

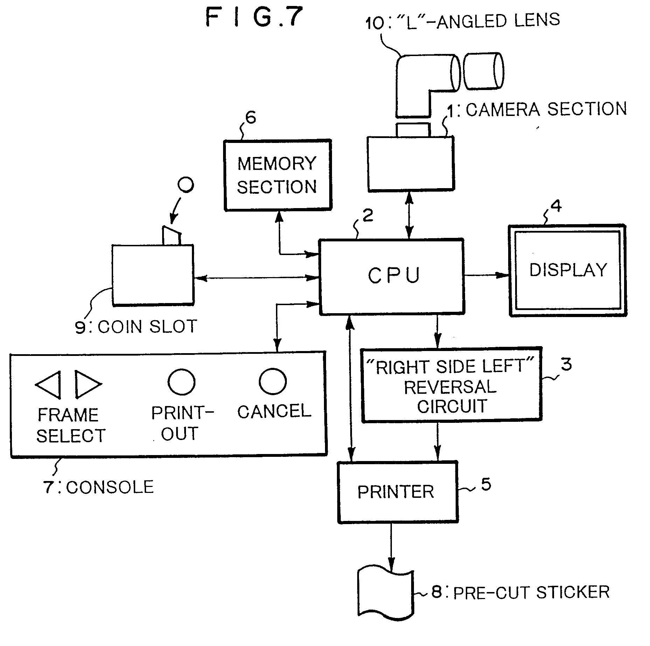

Fig. 7 shows a seal-forming print apparatus using an "L"-angled lens according to the second embodiment of the present invention, which is different from Fig. 1 only in that: it uses an "L"-angled lens and the "right side left" reversal circuit 3 is between the CPU 2 and the printer section 5.

Radiation from an object passes through an elongated cave section to determine an angle of projection, thereby permitting the radiation from the object to focus on the camera section 1 after reflecting on the "L"-angled lens 10. The "L"-angled lens 10 is called "right side left" reversal lens, and is used in projecting a beam of light conveying a "right side left" reversal of object. The beam of reversed object image falls on an associated photo-electric converter such as a photo-electric converter of CCD or C-MOS panel type, and then, the analogue signal representing the reversed object image is outputted and directed to the CPU 2. A plurality of background images are stored in the memory section 6 in digital form, and a desired background is selected among them by depressing the selection button in the console 7. Thereafter, the reversed object image is put in the predetermined area of the selected background image as described above, and an object-and-background composite signal results.

While observing the object-and-background composite image in the display, the person can decide which pose is best to be photographed. Once he has made a decision, he depresses the print button in the console 7. In a few minutes a pre-cut sticker of object-and-background composite photographs appears from the printer section 5. The person can decide which pose is best to be photographed by observing the display, in which his image varies with his posing as if he were in front of mirror. The mirror-like function of the display device facilitates his selection and decision of which pose is to be photographed.

A coin slot 9 is connected to the CPU 2 so that the throwing-in of the coin may be detected to permit the operation of the console 7. Such coin slot 9 may be equally used in Fig. 1.

### Third Embodiment

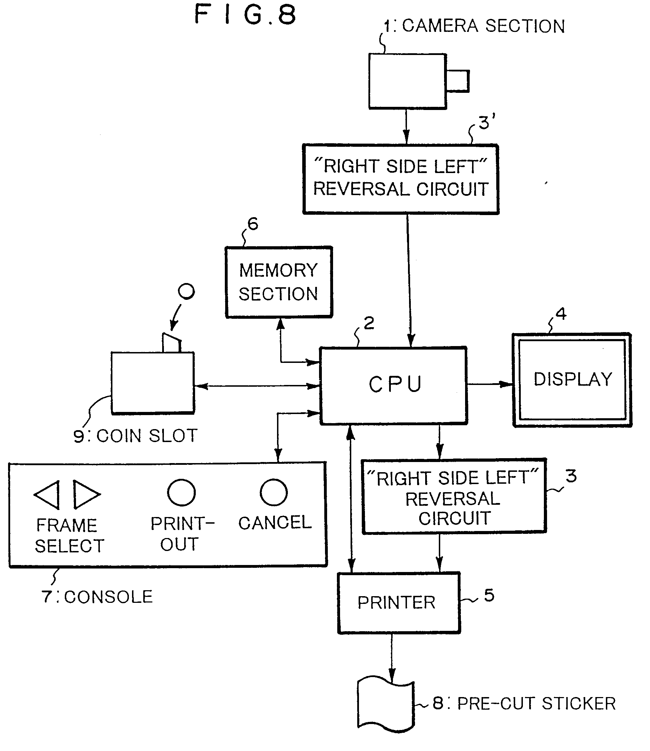

Fig. 8 shows a seal-forming print apparatus using no "L"-angled lens according to the third embodiment. It uses a "right side left" reversal circuit 3' is used in place of an "L"-angled lens. As is the case with the seal-forming print apparatus of Fig. 1, the camera section 1 and the display 4 are designed to move in unison, thereby permitting them to be oriented with their optical axes set in one and same direction.

First, the camera section 1 takes a picture of a person to output an object image signal, which is directed to the "right side left" reversal circuit 3'. The object image signal is converted into a corresponding digital signal by an associated analogue-to-digital converter, and then, the digital signal is outputted from the FILO type memory of the "right side left" reversal circuit 3' to the CPU 2. In the display processing sub-section 22 of the CPU 2 the digital-converted, object image signal representing a "right side left" reversed object image is added to the predetermined area of a background image signal representing a desired background selected among those stored in the memory section 6. The so superimposed object-and-background composite signal is outputted directly to the display 4 to show a "right side left" reversed object image. Watching the display 4, the person decides which pose is best to be photographed, and then he instructs the printer 5 to print out the displayed image.

The post-decision proceeding is the same as described above in connection with the second embodiment: the object-and-background composite signal along with required control signals are applied to the printer section 5 via the "right side left" reversal circuit 3, and a pre-cut sticker of composite photographs appears from the printer section 5 in a few minutes.

In this particular embodiment two "right side left" reversal circuits 3 and 3', but the seal-forming print apparatus can be reduced in size, and is even smaller than the seal-forming print apparatus according to the second embodiment. Also, advantageously the camera section 1 and the display 4 are light in weight, and can be so combined that they may be moved in unison. Additionally use of two "right side left" reversal circuits 3 and 3' permits the forming of bilaterally symmetrical images, if occasions demand.

As may be understood from the above, a seal-forming print apparatus according to the present invention is small in size, and it permits a mirror-like object image to appear in the display, thereby facilitating the decision on which pose is best to be photographed.

The "right side left" reversal of object images can be attained with the aid of electronics, accordingly permitting the down-sizing of the system. Also. the camera section, the easy-to-handle console, switching units (which are capable of forming object and background images to show composite images on real time), and printer section are coordinated in function to provide pre-cut stickers each bearing same photographs most efficiently.

### [Industrial Applicability]

The present invention is used to a seal print apparatus and more particularly to a desk-top type of seal print apparatus or seal-forming print apparatus, which is reduced in size and weight, and is capable of photographing a real person and combining the portrait with a selected frame to print out the composite image.

## Claims

1. A seal-forming print apparatus characterized in that it comprises:
a memory section (6) to store background images in the form of digital signals;
a camera section (1) to take a picture of an object;
a composing section (2) to produce a composite image from a selected background image and an image of the object;
a printer (5) to print out said composite image;
a "right side left" reversal circuit (3) to reverse said composite image and output the "right side left" reversal of said composite image; and
a display (4) to show the "right side left" reversal of said composite image.

2. A seal-forming print apparatus according to claim 1,
wherein said "right side left" reversal circuit (3) comprises a memory (33) in which data of composite images can be written in and read out according to the "first-in-last-out" principle.

3. A seal-forming print apparatus according to claim 1,
wherein said "right side left" reversal circuit (3) comprises a linear memory (33) in which analogue data of the picture of the object from said camera section can be written in and read out according to the "first-in-last out" principle, thereby permitting the analogue data of the picture of the object to be read and composed with the digital signals of background images.

4. A seal-forming print apparatus according to claim 1,
wherein said composing section comprises means to reduce the analogue signals representative of the picture of the object from said camera section and the digital signals representative of background images from said memory section (6) to R, G and B signals, and means to selectively output said R, G and B signals pertaining to said analogue signals of the object at predetermined coded-portions of said R, G and B signals pertaining to said digital signals of background images, thereby producing and outputting object-and-background composite images.

5. A seal-forming print apparatus characterized in that it comprises:
a memory section (6) to store background images in the form of digital signals;
a camera section (1) to take a picture of an object and output the analogue signals representative of the image of the object;
a graphic processing section (53) to insert the image of the object in a selected background image or in a predetermined area of a selected background image, thereby producing and outputting an object-and-background composite image;
a printer (5) to print out said object-and-background composite image;
a "right side left" reversal circuit (3) to reverse said object-and-background composite image and output a "right side left" reversal of said object-and-background composite image; and
a display to show the "right side left" reversal of said object-and-background composite image.

6. A seal-forming print apparatus according to claim 5,
wherein said graphic processing section (53) comprises means to reduce the analogue signals of the object from said camera section and the digital signals of a selected background image from said memory section to R, G and B signals, and means to selectively add said R, G and B signals pertaining to the object to predetermined coded-portions of said R, G and B signals pertaining to said selected background image, thereby producing and outputting object-and-background composite images each having the object image fitted in the predetermined area of said selected background.

7. A seal-forming print apparatus according to claim 5,
wherein said graphic processing section (53) comprises means to reduce the analogue signals of the object from said camera section and the digital signals of a selected background image from said memory section to R, G and B signals, and switching means to allow said R, G and B signals pertaining to the object to be added to predetermined coded-portions of said R, G and B signals pertaining to said selected background image, thereby producing and outputting object-and-background composite images each having the object image inserted in the predetermined area of said selected background.

8. A seal-forming print apparatus characterized in that it comprises:
a L angle lens (10) for performing a "right side left" reversal of an object image;
a camera section (1) to take a picture of the "right side left" reversal image by said L angle lens and output the analogue signals representative of the image of the object;
a memory section (6) to store background images in the form of digital signals;
a graphic processing section (2) to insert the image of the object in a predetermined area of the selected background image, thereby producing and outputting an object-and-background composite image;
a display (4) to show the object-and-background composite image;
a "right side left" reversal circuit (3) to reverse said object-and-background composite image and output the "right side left" reversal of said object-and-background composite image; and
a printer (5) to print out said object-and-background composite image.
